# EUROPÄISCHE PATENTSCHRIFT

(11) **EP 2 313 662 B1**
(45) Veröffentlichungstag und Bekanntmachung des Hinweises auf die Patenterteilung: **26.11.2014**
(21) Anmeldenummer: 09772012.2
(22) Anmeldetag: 02.07.2009
(51) Int. Cl.: F16B 5/06

(54) **BEFESTIGUNGSBINDER**
FIXING TIE
LIEN DE FIXATION

(30) Priorität: 02.07.2008 DE 202008008961 U
(43) Veröffentlichungstag der Anmeldung: 27.04.2011
(73) Patentinhaber: Gmeilbauer, Engelbert, 82229 Seefeld (DE)
(72) Erfinder: Gmeilbauer, Engelbert, 82229 Seefeld (DE)
(74) Vertreter: Castell, Klaus
(86) Internationale Anmeldenummer: PCT/DE2009/000925
(87) Internationale Veröffentlichungsnummer: WO 2010/000242

(56) Entgegenhaltungen:
- WO-A1-2005/037673
- WO-A1-2006/030725
- DE-A1- 4 409 171
- ES-U- 1 064 782
- GB-A- 1 221 829
- US-A- 4 865 501
- US-A- 5 059 193
- US-A1- 2008 066 504

## Beschreibung

Die Erfindung bezieht sich auf einen Befestigungsbinder mit einem wenigstens einseitig mit Querrillen oder querstehenden Sägezähnen versehenen Band und einem Schloss, das das in dasselbe eingesteckte Band in Rückzugrichtung verriegelt, wobei an ein Ende des Bandes ein Kopf (12) geformt und das Schloss (20) als separates, auf das Band (18) aufsteckbares Teil ausgebildet ist.

Kabelbinder sind ein beliebtes Befestigungselement zur einstweiligen oder dauernden Verbindung von Gegenständen praktisch aller Art. Man versteht darunter Kunststoffstreifen oder -bänder, die einseitig mit quer zu ihrer Längserstreckung verlaufenden Rillen oder Sägezähnen versehen sind. An das eine Ende eines solchen Kunststoffstreifens ist ein quaderförmiges Köpfchen angeformt, mit einer entsprechend dem Profil des Streifens oder Bandes rechteckigen Durchgangsöffnung. In der Durchgangsöffnung sitzt eine zu einer Längsseite der Rechtecköffnung unter Federvorspannung stehende Sperrlippe oder -zunge, die sich beim Einführen des Streifens oder Bandes beiseite drücken lässt und beim Anziehen des Bandes in eine der Rillen oder eine der Sägezahnnuten einrastet, so dass ein Zurückziehen des Bandes nicht oder nur unter Zuhilfenahme eines geeigneten Werkzeugs möglich ist. Das so ausgestattete Köpfchen sei im folgenden als Schloss bezeichnet. Kabelbinder sind daher im allgemeinen zum Einmalgebrauch bestimmt; man öffnet einen einmal geschlossenen Kabelbinder durch Auftrennen des Bandes mittels eines Messers oder einer Zange.

Der Anwendungsbereich von Kabelbindern geht über den durch die Bezeichnung nahegelegten Zweck, Fixieren und Bündeln von Stromkabeln, weit hinaus. Beispiele sind die Installationstechnik (Fixieren von Rohrisolierungen), Gerätebau, Verpackungen u.a., bis hin zum Fesselungsinstrument für renitente Delinquenten.

Unmöglich ist es mit den bekannten Kabelbindern, sie zur Verbindung platten- oder bahnförmiger Gegenstände aneinander, zur Befestigung langgestreckter Gegenstände an platten- oder bahnförmigen Gegenständen oder zur Wand- und Deckenbefestigung von Gegenständen zu verwenden.

Ausgehend von diesem Stand der Technik liegt der Erfindung die Aufgabe zugrunde, den Anwendungsbereich von Kabelbindern in der aufgezeigten Weise zu erweitern.

Diese Aufgabe wird erfindungsgemäß dadurch gelöst, dass der Kopf in Form zweier Flügel ausgebildet ist, die die Form eines aufgeweiteten V haben, dessen Schenkel das Band einschließen, und unter dem Kopf auf das Band ein Teller aufgeschoben ist, dessen konvexe Seite dem Kopf zugewandt ist, und das Band auf beiden Seiten mit einer Verzahnung versehen ist, wobei die Verzahnung um eine halbe Teilung gegeneinander versetzt und das Schloss mit zwei einander gegenüberliegenden Sperrzungen versehen ist oder bei gleichlaufenden Verzahnungen die Sperrzungen im Schloss um eine halbe Teilung gegeneinander versetzt angeordnet sind und wobei das Schloss tellerförmig ausgebildet ist, wobei die konkave Seite des Tellers dem Kopf (12) zugewandt ist.

Ein ähnliches Befestigungselement ist bereits aus der EP 1 496 270 A2 bekannt. Es handelt sich hierbei jedoch nicht um einen Befestigungsbinder mit einem flexiblen Band, sondern um eine Wandbefestigung für Heizkörper mit einem starren, mit einem Gewinde versehenen Stab, an dessen eines Ende ein Kopf angeformt ist und auf dessen anderes Ende sich ein selbstsperrendes Schloss aufschieben lässt.

Der Kopf ist grundsätzlich als quer zur Längserstreckung des Bandes stehendes Element ausgebildet, dessen Quererstreckung in wenigstens einer Richtung größer ist als die des Bandes.

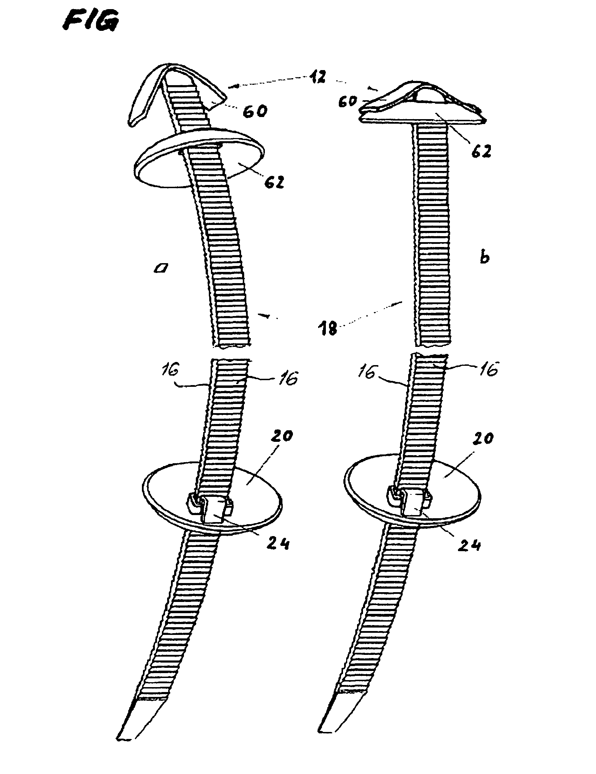

Im Folgenden wird die Erfindung anhand des in der Zeichnung dargestellten Ausführungsbeispiels erläutert. Es zeigt die einzige Figur in perspektivischer Ansicht eine Ausführungsform des Befestigungsbinders.

Die Figur a zeigt einen Befestigungsbinder, dessen an das Band 18 angeformter Kopf 12 in Form zweier Flügel oder Sprossen 60 mit leichter Biegung zum Band 18 ausgebildet ist. Mit anderen Worten, die Flügel 60 haben die Form eines aufgeweiteten V, dessen Schenkel das Band 18 einschließen. Unter dem Kopf 12 ist auf das Band 18 ein Teller 62 aufgeschoben, dessen konvexe Seite dem Kopf 12 zugewandt ist. Das Band 18 ist auf beiden Seiten mit einer Verzahnung 16 versehen, wobei die Zähne der beiden Seiten um eine halbe Teilung gegeneinander versetzt sind. Durch die so bewirkte feinere Teilung lässt sich eine stärkere Pressung zwischen den miteinander zu verbindenden Körpern erreichen. Die Verzahnungen reichen bis unmittelbar unter den Kopf 12. Dies macht den Befestigungsbinder vielseitiger, weil er so auch die Befestigung sehr dünner Gegenstände, z.B. Folien erlaubt. Das Schloss 20 ist ebenfalls tellerförmig aus gebildet, wobei die konkave Seite des Tellers dem Kopf 12 zugewandt ist. Das Schloss 20 ist mit zwei einander gegenüberliegenden Sperrzungen 24 versehen, von denen nur ein an das Schloss 20 angeformtes Ende gezeigt ist. Die Zähne oder Kante der Sperrzungen greifen abwechselnd in eine Nut zwischen den Zähnen der einen oder anderen Verzahnung ein. Statt die Verzahnungen um eine halbe Teilung zu versetzen, könnte man bei gleichlaufenden Verzahnungen 16 die Sperrzungen im Schloss um eine halbe Teilung gegeneinander versetzt anordnen.

Die Figur b zeigt den Befestigungsbinder der Figur a mit an den Flügeln 60 des Kopfes 12 anliegendem Teller 62, der die Flügel 60 leicht gespreizt hat. Die Pressung zwischen den miteinander zu verbindenden Gegenständen wird durch die konkave Form des Tellers und des Schlosses weiter erhöht.

## Patentansprüche

1. Befestigungsbinder mit einem wenigstens einseitig mit Querrillen oder quer stehenden Sägezähnen (16) versehenem Band (18) und einem Schloss (20), das das in dasselbe eingesteckte Band in Rückzugsrichtung verriegelt, wobei an ein Ende des Bandes ein Kopf (12) geformt und das Schloss (20) als separates, auf das Band (18) aufsteckbares Teil ausgebildet ist, ***dadurch gekennzeichnet, dass*** der Kopf (12) in Form zweier Flügel (60) ausgebildet ist, die die Form eines aufgeweiteten V haben, dessen Schenkel das Band (18) einschließen, und unter dem Kopf (12) auf das Band (18) ein Teller (62) aufgeschoben ist, dessen konvexe Seite dem Kopf (12) zugewandt ist, und das Band auf beiden Seiten mit einer Verzahnung (16) versehen ist, wobei die Verzahnung (16) um eine halbe Teilung gegeneinander versetzt und das Schloss (20) mit zwei einander gegenüberliegenden Sperrzungen (24) versehen ist oder bei gleichlaufenden Verzahnungen die Sperrzungen (24) im Schloss (20) um eine halbe Teilung gegeneinander versetzt angeordnet sind und wobei das Schloss (20) tellerförmig ausgebildet ist, wobei die konkave Seite des Tellers dem Kopf (12) zugewandt ist.

## Claims

1. A fixing tie with a strip (18) provided at least on one side with transverse grooves or sawteeth (16) standing transversely, and with a lock (20) which locks the strip, inserted into the same, in the direction of withdrawal, wherein a head (12) is formed onto one end of the strip, and the lock (20) is constructed as a separate part that can be fitted onto the strip (18), **characterized in that** the head (12) is constructed in the form of two wings (60) which have the shape of a widened V, the arms of which enclose the strip (18), and under the head (12) a plate (62) is slid onto the strip (18), the convex side of which plate faces the head (12), and the strip is provided on both sides with a toothing (16), wherein the toothing (16) is offset relative to each other by a half spacing and the lock (20) is provided with two locking tongues (24) lying opposite each other or, in the case of unidirectional toothings, the locking tongues (24) are arranged offset with respect to each other by a half spacing in the lock (20) and wherein the lock (20) is constructed in a plate shape, wherein the concave side of the plate faces the head (12).

## Revendications

1. Lien de fixation comprenant une courroie (18) dotée au moins d'un coté de rainures transversales ou de dents de scie (16) debout transversales et d'un verrou (20) qui est verrouillé dans le sens de rappel dans cette même courroie insérée, sachant qu'une tête (12) est formée sur une extrémité de la courroie et que le verrou (20) est conçu en tant que partie séparée pouvant être enfichée sur la courroie (18), **caractérisé en ce que** la tête est conçue sous forme de deux ailes (60) qui ont la forme d'un V déployé dont les branches enferment la courroie (18), et une rondelle (62) est poussée sur la courroie (18) sous la tête (12), son côté convexe (12) étant tourné vers la tête (12), et la courroie est dotée de dents (16) des deux côtés, sachant que les dents (16) sont décalées l'une contre l'autre d'une moitié et que le verrou (20) est doté de deux languettes de blocage (24) opposées l'une à l'autre, ou bien si les dents sont parallèles, les languettes de blocage (24) sont disposées décalées l'une contre l'autre d'une moitié dans le verrou (20) et sachant que le verrou (20) est en forme de rondelle, sachant que le côté concave de la rondelle est tourné vers la tête (12).
